# FASCICULE DE BREVET EUROPEEN

(11) **EP 4 055 078 B1**
(45) Date de publication et mention de la délivrance du brevet: **08.07.2026**
(21) Numéro de dépôt: 20816277.6
(22) Date de dépôt: 05.11.2020
(51) Int. Cl.: C08G 59/22, C08G 59/26, C08G 59/32, C08G 59/38

(54) **COMPOSITION DE RÉSINE D'ÉPOXYDE COMPRENANT UN ÉPOXYDE D'ISOSORBIDE ET SON UTILISATION POUR STABILISER UN MATÉRIAU FIBREUX OU POREUX**
EPOXIDHARZZUSAMMENSETZUNG MIT EINEM ISOSORBIDEPOXID UND IHRE VERWENDUNG ZUR STABILISIERUNG EINES FASERIGEN ODER PORÖSEN MATERIALS
EPOXIDE RESIN COMPOSITION COMPRISING AN ISOSORBIDE EPOXIDE AND USE THEREOF FOR STABILIZING A FIBROUS OR POROUS MATERIAL

(30) Priorité: 08.11.2019 FR 1912571
(43) Date de publication de la demande: 14.09.2022
(73) Titulaire: ROQUETTE FRERES, 62136 Lestrem (FR)
(72) Inventeur: SAINT-LOUP, René, 59160 LOMME (FR); SAHUT, Audrey, 62136 Lestrem (FR); CASTANIER, Marianne, 48300 Langogne (FR); FESQUET, François, 30100 Ales (FR)
(74) Mandataire: Roquette IP International
(86) Numéro de dépôt international: PCT/FR2020/052012
(87) Numéro de publication internationale: WO 2021/089954

(56) Documents cités:
- WO-A1-2017/025687
- CN-A- 107 955 489
- CN-A- 110 396 175
- US-A1- 2018 230 261
- US-B2- 10 174 152

## Description

La présente invention concerne le domaine des résines époxy, et plus particulièrement les résines époxy utilisées pour stabiliser ou renforcer un matériau fibreux ou poreux par imprégnation.

### Introduction

L'utilisation de pièces en bois massif se heurte généralement au viellissement du bois. En effet, les variations de température et d'humidité au cours du temps peuvent entraîner une déformation, une décoloration, ou même une fragmentation de la pièce, jusqu'à la rendre inutilisable.

Il apparaît donc nécessaire de pouvoir stabiliser ce bois en masse afin qu'il conserve son aspect et sa forme au cours du temps.

La stabilisation se doit d'être complète, colorable et économiquement pertinente.

Pour l'imprégnation des pièces massives sans problématique esthétique, les procédés existants utilisent des produits dangereux voire interdits comme la créosote (ex : poteau téléphonique, traverse de voies de chemin de fer) mais qui n'ont pas encore trouvé d'équivalent économique, ou bien des imprégnations de surface qui ne pénètrent que de quelques milimètres dans le bois.

On peut stabiliser les bois utilisés pour faire des parquets ou des bâtiments par traitement thermique (torréfaction).

Pour les industries d'art (coutellerie, bijouterie, luxe, archerie, instruments de musique, armurerie...), la stabilisation est effectuée par des traitements à l'autoclave avec des résines polyester insaturées ou acryliques mais qui posent des problèmes d'émission de composés volatils organiques (COV) pour les premières et d'ouvrabilité pour les secondes. Par ailleurs, les époxydes convenant à ce type de procédé sont à base de Bisphénol A (BPA) que l'on cherche à éliminer pour cause de toxicité. Les documents CN 110 396 175 A et CN 107 955 489 A traitent du problème de la stabilisation du bois par imprégnation sous vide d'une resine époxy. Les résines utilisées sont de type bisphenol A.

Il existe également le procédé de furfurylation mais qui se limite à certaines essences et certains coloris (brun).

Il existe donc un besoin de pouvoir disposer d'une composition ne comprenant pas de produits toxiques ou susceptibles d'émettre des COV, permettant de stabiliser des matériaux fibreux ou poreux, en particulier le bois massif, de manière complète et à cœur.

Poursuivant ses recherches par de très nombreux travaux, la société Demanderesse a trouvé qu'une composition de résine époxy à base de d'époxyde d'isosorbide permettait d'atteindre cet objectif.

D'autres caractéristiques et avantages de la présente invention apparaîtront à la lecture de la description détaillée suivante.

### Résumé de l'invention

Un premier objet de la présente invention concerne une composition de prépolymères époxy comprenant:
- (A) un époxyde d'isosorbide de formule (I): 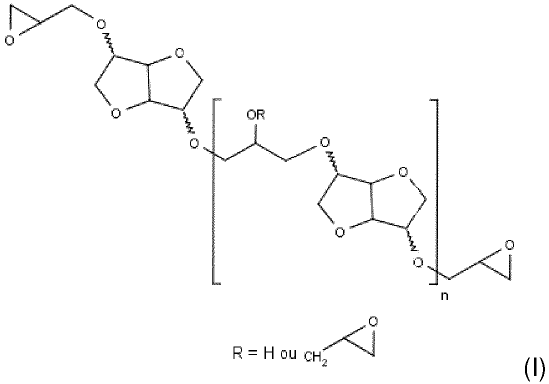 où n est un entier de 0 à 300,
- (B) un époxyde comprenant au moins 3 fonctions époxy.

Un second objet de l'invention concerne une composition durcissable comprenant la composition de prépolymères époxy selon l'invention et un durcisseur (D) choisi parmi les polyamines.

Un troisième objet de la présente invention concerne une résine époxy obtenue par polymérisation de la composition durcissable selon l'invention.

Un quatrième objet de la présente invention concerne un procédé de stabilisation d'un matériau fibreux ou poreux comprenant l'imprégnation sous vide dudit matériau par la composition durcissable selon l'invention.

Un cinquième objet de la présente invention concerne l'utilisation d'un époxyde d'isosorbide de formule (I): 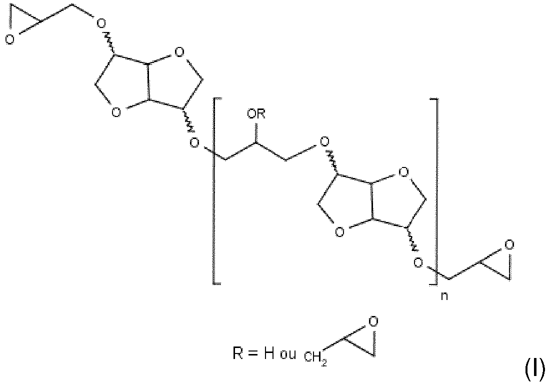
où n est un entier de 0 à 300, tel que décrit précédemment,
dans une composition durcissable selon l'invention pour stabiliser un matériau fibreux ou poreux par imprégnation sous vide.

### Description détaillée

Dans la présente demande de brevet, l'expression « compris(e) entre ... et ... » doit être entendue comme incluant les bornes.

La composition de prépolymères époxy selon l'invention comprend:
- (A) un époxyde d'isosorbide de formule (I): 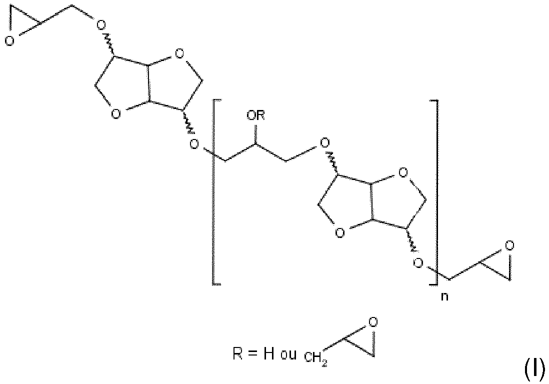 où n est un entier de 0 à 300,
- (B) un époxyde comprenant au moins 3 fonctions époxy.

Selon la présente invention, la composition de prépolymères époxy comprend un époxyde d'isosorbide (A), monomère ou polymère, et présentant la formule (I) suivante : 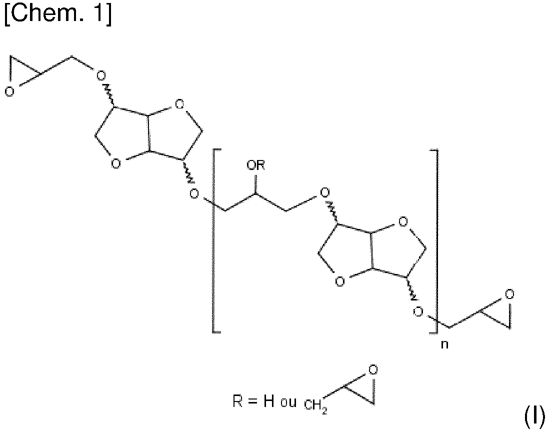 où n est un entier de 0 à 300, en particulier de 0 à 10, et plus particulièrement de 0 à 5.

L'époxyde (A) peut être fabriqué selon le procédé décrit dans la demande WO 2015/110758 A1.

Il présente l'avantage d'être biosourcé et n'est pas un perturbateur endocrinien contrairement au bisphénol A.

Par « époxyde d'isosorbide (A) », on entend un seul époxyde d'isosorbide de formule (I) ou un mélange de différents époxydes d'isosorbide qui diffèrent entre eux par le substituant R et/ou l'indice n. Lorsqu'il s'agit d'un mélange de différents types d'époxyde d'isosorbide, R peut varier tel que précisé dans la formule (I) et/ou n peut varier de 0 à 300, de préférence de 0 à 10, et plus préférentiellement encore de 0 à 5.

L'indice n peut aller de 0 à 300, en particulier être égal à 290, 280, 270, 260, 250, 240, 230, 220, 210, 200, 190, 180, 170, 160, 150, 140, 130, 120, 110, 100, 90, 80, 70, 60, 50, 40, 30, 20, 10, 9, 8, 7, 6, 5, 4, 3, 2, 1.

Selon un mode de réalisation, l'indice n peut être compris entre 0 et 290, 0 et 280, 0 et 270, 0 et 260, 0 et 250, 0 et 240, 0 et 230, 0 et 220, 0 et 210, 0 et 200, 0 et 190, 0 et 180, 0 et 170, 0 et 160, 0 et 150, 0 et 140, 0 et 130, 0 et 120, 0 et 110, 0 et 100, 0 et 90, 0 et 80, 0 et 70, 0 et 60, 0 et 50, 0 et 40, 0 et 30, 0 et 20, 0 et 10, 0 et 9, 0 et 8, 0 et 7, 0 et 6, 0 et 5.

Selon un mode de réalisation, l'indice n peut être compris entre 1 et 290, 1 et 280, 1 et 270, 1 et 260, 1 et 250, 1 et 240, 1 et 230, 1 et 220, 1 et 210, 1 et 200, 1 et 190, 1 et 180, 1 et 170, 1 et 160, 1 et 150, 1 et 140, 1 et 130, 1 et 120, 1 et 110, 1 et 100, 1 et 90, 1 et 80, 1 et 70, 1 et 60, 1 et 50, 1 et 40, 1 et 30, 1 et 20, 1 et 10, 1 et 9, 1 et 8, 1 et 7, 1 et 6, 1 et 5.

Selon un mode de réalisation, l'indice n peut être compris entre 2 et 290, 2 et 280, 2 et 270, 2 et 260, 2 et 250, 2 et 240, 2 et 230, 2 et 220, 2 et 210, 2 et 200, 2 et 190, 2 et 180, 2 et 170, 2 et 160, 2 et 150, 2 et 140, 2 et 130, 2 et 120, 2 et 110, 2 et 100, 2 et 90, 2 et 80, 2 et 70, 2 et 60, 2 et 50, 2 et 40, 2 et 30, 2 et 20, 2 et 10, 2 et 9, 2 et 8, 2 et 7, 2 et 6, 2 et 5.

Selon un mode de réalisation, l'indice n peut être compris entre 3 et 290, 3 et 280, 3 et 270, 3 et 260, 3 et 250, 3 et 240, 3 et 230, 3 et 220, 3 et 210, 3 et 200, 3 et 190, 3 et 180, 3 et 170, 3 et 160, 3 et 150, 3 et 140, 3 et 130, 3 et 120, 3 et 110, 3 et 100, 3 et 90, 3 et 80, 3 et 70, 3 et 60, 3 et 50, 3 et 40, 3 et 30, 3 et 20, 3 et 10, 3 et 9, 3 et 8, 3 et 7, 3 et 6, 3 et 5.

Selon un mode de réalisation, l'indice n peut être compris entre 4 et 290, 4 et 280, 4 et 270, 4 et 260, 4 et 250, 4 et 240, 4 et 230, 4 et 220, 4 et 210, 4 et 200, 4 et 190, 4 et 180, 4 et 170, 4 et 160, 4 et 150, 4 et 140, 4 et 130, 4 et 120, 4 et 110, 4 et 100, 4 et 90, 4 et 80, 4 et 70, 4 et 60, 4 et 50, 4 et 40, 4 et 30, 4 et 20, 4 et 10, 4 et 9, 4 et 8, 4 et 7, 4 et 6, 4 et 5.

Selon un mode de réalisation, l'indice n peut être compris entre 5 et 290, 5 et 280, 5 et 270, 5 et 260, 5 et 250, 5 et 240, 5 et 230, 5 et 220, 5 et 210, 5 et 200, 5 et 190, 5 et 180, 5 et 170, 5 et 160, 5 et 150, 5 et 140, 5 et 130, 5 et 120, 5 et 110, 5 et 100, 5 et 90, 5 et 80, 5 et 70, 5 et 60, 5 et 50, 5 et 40, 5 et 30, 5 et 20, 5 et 10, 5 et 9, 5 et 8, 5 et 7, 5 et 6.

Selon un mode de réalisation, l'indice n peut être compris entre 10 et 290, 10 et 280, 10 et 270, 10 et 260, 10 et 250, 10 et 240, 10 et 230, 10 et 220, 10 et 210, 10 et 200, 10 et 190, 10 et 180, 10 et 170, 10 et 160, 10 et 150, 10 et 140, 10 et 130, 10 et 120, 10 et 110, 10 et 100, 10 et 90, 10 et 80, 10 et 70, 10 et 60, 10 et 50, 10 et 40, 10 et 30, 10 et 20.

L'époxyde (A) présente typiquement une viscosité Brookfield mesurée à 25°C comprise entre 500 mPa.s et 10000 mPa.s, en particulier entre 1000 mPa.s et 8000 mPa.s, plus particulièrement entre 2000 mPa.s et 6000 mPa.s, plus particulièrement entre 3000 mPa.s et 5000 mPa.s.

L'utilisation d'un mélange de différents époxydes d'isosorbide dans la composition permet d'ajuster notamment d'ajuster les propriétés mécaniques de la composition.

Le poids équivalent de fonctions époxydes dans l'époxyde d'isosorbide (A) peut être compris entre 120 et 1500 g/éq., en particulier entre 150 et 300 g/éq., plus particulièrement entre 160 et 250 g/éq. Plus particulièrement, le poids équivalent de fonctions époxydes dans l'époxyde d'isosorbide (A) est d'environ 180 g/éq.

La proportion d'époxyde (A) dans la composition de prépolymères époxy peut être comprise entre 15% et 75% en poids, en particulier entre 15% et 60% en poids, plus particulièrement entre 15% et 55% en poids, plus particulièrement entre 15% et 50% en poids, plus particulièrement entre 20% et 50% en poids par rapport au poids total de la composition.

Selon la présente invention, la composition de prépolymères époxy comprend un second époxyde (B) comprenant au moins 3 fonctions époxy.

L'époxyde (B) présente l'avantage de diminuer la reprise en eau de la résine époxy durcie par polymérisation avec un durcisseur.

Il peut être choisi parmi les polyglycidyl éthers, en particulier les diglycidyl éthers, les triglycidyl éthers ou les tetraglycidyl éthers, plus particulièrement parmi les triglycidyl éthers ou les tetraglycidyl éthers, plus particulièrement parmi les triglycidyl éthers.

L'époxyde (B) est avantageusement choisi parmi le triglycidyl éther du triméthylol propane, le triglycidyl éther du triméthylol éthane, le triglycidyl éther de p-aminophénol, le triglycidyléther de m-aminophénol, le triglycidyl éther de polyoxypropylène glycol, le tetraglycidyl éther de pentaérythritol, le tetraglycidyl méthylène dianiline ou le polyglycidyl éther de sorbitol. De préférence, l'époxyde (B) est le triglycidyl éther du triméthylol propane.

Le poids équivalent de fonctions époxydes dans l'époxyde (B) peut être compris entre 120 et 500 g/éq., en particulier entre 130 et 350 g/éq., plus particulièrement entre 140 et 250 g/éq. Plus particulièrement encore, le poids équivalent de fonctions époxydes dans l'époxyde (B) est d'environ 160 g/eq.

La proportion d'époxyde (B) dans la composition de prépolymères époxy peut être comprise entre 20% et 85% en poids, plus particulièrement entre 25% et 80% en poids, plus particulièrement entre 30% et 75% en poids, plus particulièrement entre 35% et 70% en poids, plus particulièrement entre 40% et 60% en poids par rapport au poids total de la composition.

Le ratio massique de l'époxyde (A) sur l'époxyde (B) peut être compris entre 0,3 et 1,0, en particulier entre 0,3 et 0,8, plus particulièrement entre 0,4 et 0,7, plus particulièrement encore entre 0,5 et 0,6.

Selon un mode de réalisation particulier, la composition de prépolymères époxy selon l'invention comprend en outre un diluant réactif (C) choisi parmi les mono-époxydes.

L'ajout d'un diluant réactif (C) dans la composition de résine époxy selon l'invention permet d'ajuster la viscosité de la composition de prépolymères époxy.

Selon un mode de réalisation préféré, la viscosité de la composition de prépolymères époxy est inférieure à 500 mPa.s préférentiellement inférieure à 400 mPa.s plus particulièrement inférieure à 350 mPa.s à la température d'imprégnation du bois.

La viscosité peut être mesurée à l'aide d'un appareil MCR501 d'Anton Paar équipé d'un cône plan CP25, en effectuant une rampe de cisaillement de 0 à 200s⁻¹.

Des exemples de mono-époxydes convenant en tant que diluant selon la présente invention sont les mono glycidyl éthers. En particulier, le diluant réactif (C) peut être choisi parmi les glycidyl éthers d'alkyle, les glycidyl éthers d'aryle ou les glycidyl éthers d'acide carboxylique, seuls ou en mélanges.

Les glycidyl éthers d'alkyle comprennent par exemple le glycidyl éther de n-butyle, le glycidyl éther d'octyle, le glycidyl éther de décyle, le glycidyl éther de dodécyle, le glycidyl éther de tridécyle, le glycidyl éther de tetradécyle, le glycidyl éther de pentadécyle, ou encore le glycidyl éther de 2-éthylhexyle.

Les glycidyl éthers d'aryle comprennent par exemple le glycidyl éther de phényle, le glycidyl éther de o-crésyle, ou encore le glycidyl éther de 4-(t-butyl)phényle.

Les glycidyl éthers d'acide carboxylique comprennent par exemple le glycidyl éther de l'acide néodécanoïque.

Selon un mode de réalisation particulier, le diluant réactif (C) est choisi parmi un mélange de glycidyl éther de dodécyle et glycidyl éther de tetradécyle (C12-C14), un mélange de glycidyl éther d'octyle et de glycidyl éther de décyle (C8-C10), un mélange de glycidyl éther de tridécyle et de glycidyl éther de pentadécyle (C13-C15) ou un mélange de glycidyl éther d'octyle et de glycidyl éther de tetradécyle (C8-C14). Encore plus particulièrement, le diluant réactif (D) est un mélange de glycidyl éther de dodécyle et glycidyl éther de tetradécyle (C12-C14).

La proportion de diluant réactif (C) dans la composition de résine d'époxyde peut être comprise entre 0% et 10% en poids, en particulier entre 2% et 8% en poids, plus particulièrement entre 3% et 7% en poids, par rapport au poids total de la composition. Plus particulièrement, la proportion de diluant réactif (C) dans la composition de résine époxy est de 5% en poids par rapport au poids total de la composition.

La composition de prépolymères époxy selon l'invention peut comprendre en outre un ou plusieurs additifs, tel qu'un agent colorant, notamment un pigment ou un colorant soluble, ou encore un catalyseur de type acide de Lewis, amine tertiaire ou imidazole.

En effet, comme décrit ci-après, la composition de prépolymères époxy selon l'invention peut être réticulée (durcie) par mise en contact avec un durcisseur (D) pour former une résine époxy. En fonction du mélange de prépolymères époxy, il peut être nécessaire d'ajouter un catalyseur pour initier ou accélérer la réaction de polymérisation.

La composition de prépolymères époxy selon l'invention peut être préparée par simple mélange des ingrédients qui la constituent.

Un second objet de l'invention concerne une composition durcissable comprenant la composition de prépolymères époxy selon l'invention et un durcisseur (D) choisi parmi les polyamines.

On entend par « composition durcissable », un mélange liquide qui est capable de polymériser pour former une résine réticulée (durcie).

Le durcisseur (D) a ainsi pour fonction de réagir avec les époxydes (A) et (B), et éventuellement l'époxyde (C) de la composition de prépolymères époxy selon l'invention pour former une résine époxy durcie par polymérisation.

Par « polyamines » on entend au sens de la présente invention des composés tels que les amines, les amidoamines, les polyamides et les polyétheramines, comportant au moins deux fonctions amines.

Ainsi, le durcisseur (D) peut-être choisi parmi:
- les diamines linéaires aliphatiques, telles que le 1,2-diaminomethane, le 1,3-diaminopropane, le butane-1,4-diamine, le pentane-1,5-diamine, le 1,6-diaminohexane, ou le 1,12-diaminododecane,
- des diamines cycliques aliphatiques, telles que l'isophorone diamine (IPDA), le 4,4'-diaminodicyclohexylméthane (PACM), le 1,2-diaminocyclohexane (DACH), le menthanediamine, ou le 1,3-bis(aminomethyl)cyclohexane (1,3 BAC),
- les diamines aromatiques, telles que la 4,4'-méthylènebis(2,6-diethylaniline) (MDEA), la 4,4'-diaminodiphénylsulphone (DDS), le 9,9-bis(4-aminophényl)fluorène (BAFL), le diéthyltoluène diamine (DETDA), le diméthyl thiotoluène diamine (DMTDA), le 4,4'-methylenebis(2-ethylaniline) (MOEA), le m-xylènediamine, le m-phénylènediamine, ou le 4,4'-diaminodiphénylméthane,
- les triamines, telles que le diéthlyène triamine (DTA),
- les tetramines, telles que le triéthylènetetramine,
- les pentamines, telles que le tetraethylenepentamine,
- les diamines d'acide gras dimériques telles que Priamine ^{®} 1074 de Croda,
- les polyétheramines telles que le poly(oxypropylène) diamine (Jeffamine^{®} D-230 de Huntsman Petrochemical, LLC), ou le poly(oxypropylène) triamine (Jeffamine^{®} T-403 de Huntsman Petrochemical, LLC), ou
- tout autre polyamine, telle que la polyethylene imine (e.g. Lupasol^{®} FG de BASF), le dipropènediamine, le diéthylaminopropylamine, le N-aminoéthylpipérazine, le dicyandiamide (Dicy)
- ou un mélange de celles-ci.

Dans un mode de réalisation particulier, le durcisseur (D) est choisi parmi les polyetheramines (di, ou tri-) telles que la Jeffamine^{®} de Huntsman, par exemple Jeffamine D-230 ou Jeffamine T-403, ou un mélange de celles-ci.

Le système époxy/amine que forme la composition durcissable selon l'invention peut être stœchiométrique ou contenir un excès de fonctions amines ou un excès de fonctions époxy.

Le ratio entre le nombre de groupements -NH du durcisseur (D) sur le nombre de groupements époxy de la composition de prépolymères époxy peut être ainsi compris entre 1:2 et 2:1, en particulier entre 2:3 et 3:2, plus particulièrement être égal à 1:1 (mélange stoechiométrique).

L'invention a également pour objet une résine époxy obtenue par polymérisation de la composition durcissable selon l'invention.

Le déclenchement de la polymérisation peut se faire spontanément ou bien nécessiter un chauffage ou la présence d'un catalyseur dans la composition durcissable.

L'invention a également pour objet un procédé de stabilisation d'un matériau fibreux ou poreux comprenant l'imprégnation sous vide dudit matériau par une composition durcissable comprenant la composition de prépolymères époxy selon l'invention telle que précédemment décrite et le durcisseur (D) tel que décrit précédement.

Certains durcisseurs (D) peuvent réagir directement à température ambiante. Dans ce cas, il convient de réaliser la composition durcissable juste avant de procéder à l'imprégnation sous cycles vide - pression.

Le procédé selon l'invention permet au matériau de conserver son aspect et de limiter les déformations au cours du temps.

Le procédé selon l'invention permet également de densifier le matériau et d'augmenter ainsi sa résistance mécanique.

Afin d'imprégner complètement le matériau, c'est-à-dire dans toute sa masse, l'imprégnation du matériau est de préférence réalisée par immersion du matériau dans un bain de ladite composition durcissable.

Selon le procédé de l'invention, le matériau est soumis à un ou plusieurs cycles, chaque cycle alternant une phase de vide et une phase de pression.

Le ou les cycles peuvent être avantageusement réalisés dans un autoclave.

Lors de la phase de vide, le milieu est soumis à une pression inférieure à la pression atmosphérique, en particulier à une pression allant de de 0,01 bar à 0,9 bar pendant un temps t₁. La dépression ainsi créée permet de vider tout ou partie de l'air ou de l'eau contenus dans les espaces présents dans le matériau (« dégazage ») et permet au matériau d'aspirer dans son intérieur la composition durcissable.

La phase de vide est ensuite suivie d'une phase de pression à une pression allant de 2 à 30 bars pendant un temps t₂. La pression appliquée permet de forcer la composition à entrer dans les espaces du matériau, jusqu'au plus profond de son intérieur, et assure donc une bonne diffusion de la composition jusqu'au cœur du bois.

Le ou les cycles sont réalisés à une température allant de 20°C à 80°C.

Les temps t₁ et t₂ peuvent varier selon les caractéristiques du matériau. Typiquement, ils peuvent indépendamment l'un de l'autre aller de 5 secondes à 1 heure, en particulier de 1 minute à 30 minutes, en particulier de 5 minutes à 20 minutes.

Les pressions appliquées peuvent également varier en fonction des caractéristiques du matériau à traiter.

Selon un mode de réalisation, la température à laquelle sont réalisés les cycles est augmentée au fur et à mesure des cycles successifs.

Par exemple, un premier cycle peut être effectué à environ 30°C, un deuxième cycle peut être ensuite effectué à 45°C et un troisième cycle peut être ensuite effectué à 60°C.

Le temps qu'il faut à la composition durcissable pour polymériser devra être supérieur au temps qu'il faut pour procéder à l'imprégnation sous vide du matériau fibreux ou poreux.

Dans la pratique, le temps de polymérisation de la composition durcissable selon l'invention sera compris entre 3 heures et 6 heures, en particulier entre 4 heures et 5 heures.

Le matériau fibreux ou poreux pouvant être stabilisé par la composition durcissable selon l'invention n'est pas particulièrement limité. Il peut notamment être choisi parmi :
- le bois, tel que le bouleau, le peuplier, le hêtre, l'orme, le frêne, l'érable, le laurel, le marronnier, le palmier, le raffir, ou le chêne,
- la corne animale telle que la corne de bélier, de blesbock, de buffle, d'impala, de kudu, de springbok, de zébu ou de gnou,
- les os d'animaux, notamment les os d'autruche, de chameau, de girafe, de kudu, de zèbre, de zebu ou de mammouth,
- les bois des cervidés tel que les bois de cerf, notamment européen ou sambar, ou de chevreuil,
- les dents ou défenses d'animaux, notamment l'ivoire, en particulier l'ivoire ou les dents de mammouth.

Le matériau poreux est choisi parmi les matériaux minéraux, notamment naturels, tels que la nacre ou le corail, ou les matériaux composites.

Le procédé selon l'invention peut être utilisée pour stabiliser nombre d'objets, réalisé à partir de matériau fibreux ou poreux, comme par exemple tout ou partie d'un instrument de musique ou un manche de couteau.

L'invention a également pour objet l'utilisation d'un époxyde d'isosorbide de formule (I): 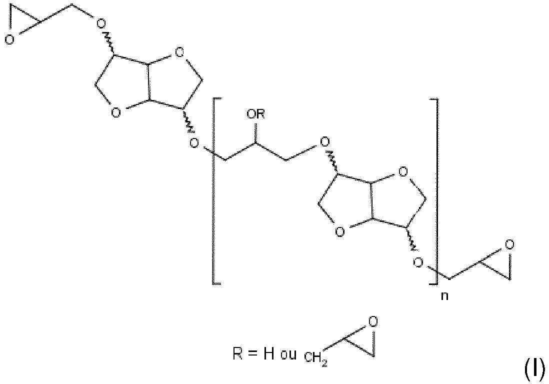
où n est un entier de 0 à 300, tel que décrit précédemment,
dans une composition durcissable selon l'invention pour stabiliser un matériau fibreux ou poreux par imprégnation sous vide.

La stabilisation permet notamment au matériau de conserver son aspect et de limiter les déformations du matériau au cours du temps.

La stabilisation a également pour effet de densifier le matériau et d'augmenter ainsi sa résistance mécanique.

### Exemple

### Stabilisation d'un bois de hêtre :

5 kg de hêtre ont été immergés dans un bac contenant 8 l d'une composition durcissable selon l'invention ayant la composition massique suivante :
- 40% d'isosorbide époxydée de viscosité brookfield à 25°C égale à 4500 mPa.s,
- 55% de triglycidyléther du triméthylol propane (TGETMP), et
- 5 % d'un diluant époxy à chaîne grasse en C12-C14,

auquel est additionné un durcisseur Jeffamine ^{®} en une quantité qui diffère selon le type de durcisseur :
   - 34 pcr / résine époxy si Jeffamine ^{®} D-230 ;
   - 47 pcr / résine époxy si Jeffamine ^{®} T-403 ;
« pcr » signifiant « pour cent de résine »).

Le bac contenant résine et bois est porté à 30°C dans un autoclave.

Arrivé à température, une dépression de 0,2 bar est appliquée pendant 15 minutes puis une pression de 12 bars pendant 5 minutes.

Ce cycle de pression dépression est reconduit ensuite 2 fois à 45°C puis à 60 °C.

Les densités des bois ainsi traités ont été augmentées de 8% en moyenne par rapport à un traitement par une résine époxyde DER 332 et le module de torsion (liaison fibre matrice) a été augmenté de 9,2% en moyenne par rapport à un traitement par une résine époxyde et de 16,4% par rapport à un traitement par une formulation polyester Polynt 1133 isophthalique (Cray Valley).

## Revendications

1. Composition de prépolymères époxy comprenant:
- (A) un époxyde d'isosorbide de formule (I): 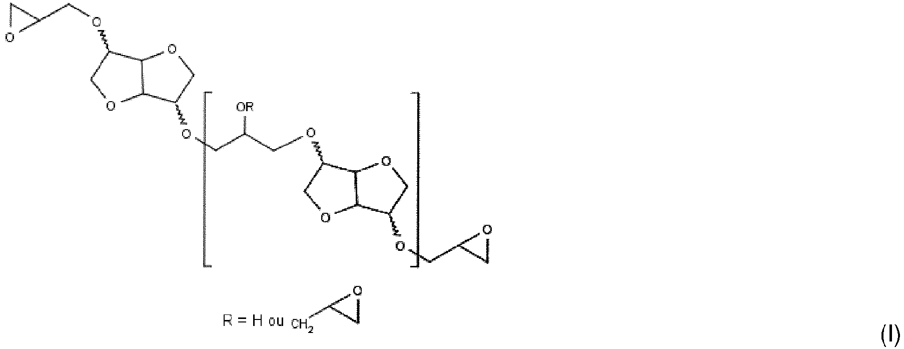 où n est un entier de 0 à 300,
- (B) un époxyde comprenant au moins 3 fonctions époxy.

2. Composition selon la revendication 1, **caractérisée en ce que** le poids équivalent de fonctions époxydes dans l'époxyde d'isosorbide (A) est compris entre 120 et 1500 g/éq., de préférence entre 150 et 300 g/éq., de préférence encore entre 160 et 250 g/éq.

3. Composition selon l'une quelconque des revendications 1 et 2, **caractérisée en ce que** la proportion d'époxyde (A) dans la composition de résine d'époxyde est comprise entre 15% et 75% en poids, en particulier entre 15% et 60% en poids, plus particulièrement entre 15% et 55% en poids, plus particulièrement entre 15% et 50% en poids, plus particulièrement entre 20% et 50% en poids par rapport au poids total de la composition.

4. Composition selon l'une quelconque des revendications 1 à 3, **caractérisée en ce que** l'époxyde (A) présente une viscosité Brookfield mesurée à 25°C comprise entre 500 mPa.s et 10000 mPa.s, en particulier entre 1000 mPa.s et 8000 mPa.s, plus particulièrement entre 2000 mPa.s et 6000 mPa.s, plus particulièrement entre 3000 mPa.s et 5000 mPa.s, mesurée comme indiqué dans la description.

5. Composition selon l'une quelconque des revendications 1 à 4, **caractérisée en ce que** l'époxyde (B) est choisi parmi les polyglycidyl éthers, en particulier les triglycidyl éthers ou les tetraglycidyl éthers.

6. Composition selon l'une quelconque des revendications 1 à 5, **caractérisée en ce que** le poids équivalent de fonctions époxydes dans l'époxyde (B) est compris entre 120 et 500 g/éq., de préférence entre 130 et 350 g/éq., de préférence encore entre 140 et 250 g/éq.

7. Composition selon l'une quelconque des revendications 1 à 6, **caractérisée en ce que** la proportion d'époxyde (B) dans la composition de résine d'époxyde est comprise entre 20% et 85% en poids, plus particulièrement entre 25% et 80% en poids, plus particulièrement entre 30% et 75% en poids, plus particulièrement entre 35% et 70% en poids, plus particulièrement entre 40% et 60% en poids par rapport au poids total de la composition.

8. Composition selon l'une quelconque des revendications 1 à 7, **caractérisée en ce que** le ratio massique de l'époxyde (A) sur l'époxyde (B) est compris entre 0,3 et 1,0, en particulier entre 0,3 et 0,8, plus particulièrement entre 0,4 et 0,7, plus particulièrement encore entre 0,5 et 0,6.

9. Composition selon l'une quelconque des revendications 1 à 8, **caractérisée en ce qu'**elle comprend en outre un diluant réactif (C) choisi parmi les mono-époxydes.

10. Composition selon l'une quelconque des revendications 1 à 9, **caractérisée en ce que** le diluant réactif (C) est choisi parmi les mono glycidyl éthers, en particulier les glycidyl éthers d'alkyle, les glycidyl éthers d'aryle ou les glycidyl éthers d'acide carboxylique.

11. Composition selon l'une quelconque des revendications 1 à 10, **caractérisée en ce que** la proportion de diluant réactif (C) dans la composition de résine d'époxyde est comprise entre 0% et 10% en poids, en particulier entre 2% et 8% en poids, plus particulièrement entre 3% et 7% en poids, par rapport au poids total de la composition.

12. Composition selon l'une quelconque des revendications 1 à 11, **caractérisée en ce qu'**elle comprend en outre un ou plusieurs additifs, choisi parmi les agents colorants, en particulier les pigments ou les colorants solubles, ou parmi les catalyseurs, tels que les catalyseurs de type acide de Lewis, amine tertiaire ou imidazole.

13. Composition durcissable comprenant la composition de prépolymères époxy selon l'une quelconque des revendications 1 à 12 et un durcisseur (D) choisi parmi les polyamines.

14. Composition durcissable selon la revendication 13, **caractérisée en ce que** le durcisseur (D) est choisi parmi :
- les diamines linéaires aliphatiques, telles que le 1,2-diaminomethane, le 1,3-diaminopropane, le butane-1,4-diamine, le pentane-1,5-diamine, le 1,6-diaminohexane, ou le 1,12-diaminododecane,
- des diamines cycliques aliphatiques, telles que l'isophorone diamine (IPDA), le 4,4'-diaminodicyclohexylméthane (PACM), le 1,2-diaminocyclohexane (DACH), le menthanediamine ou le 1,3-bis(aminomethyl)cyclohexane (1,3 BAC),
- les diamines aromatiques, telles que la 4,4'-méthylènebis(2,6-diethylaniline) (MDEA), la 4,4'-diaminodiphénylsulphone (DDS), le 9,9-bis(4-aminophényl)fluorène (BAFL), le diéthyltoluène diamine (DETDA), le diméthyl thiotoluène diamine (DMTDA), le 4,4'-methylenebis(2-ethylaniline) (MOEA), le m-xylènediamine, le m-phénylènediamine ou le 4,4'-diaminodiphénylméthane,
- les triamines, telles que le diéthlyène triamine (DTA),
- les tetramines, telles que le triéthylènetetramine,
- les pentamines, telles que le tetraéthylènepentamine,
- les diamines d'acide gras dimériques telles que Priamine ^{®} 1074 de Croda,
- les polyétheramines telles que le poly(oxypropylène) diamine (Jeffamine^{®} D-230 de Huntsman Petrochemical, LLC), le poly(oxypropylène) triamine (Jeffamine^{®} T-403 de Huntsman Petrochemical, LLC), ou
- tout autre polyamine, telle que la polyethylene imine (e.g. Lupasol ^{®} FG de BASF), le dipropènediamine, le diéthylaminopropylamine, le N-aminoéthylpipérazine ou le dicyandiamide (Dicy),
- ou un mélange de celles-ci.

15. Composition durcissable selon l'une quelconque des revendications 13 à 14, **caractérisée en ce que** le ratio entre le nombre de groupements -NH du durcisseur (D) sur le nombre de groupements époxy de la composition de prépolymères époxy est compris entre 1:2 et 2:1, en particulier entre 2:3 et 3:2, est plus particulièrement égal à 1:1.

16. Utilisation d'un époxyde d'isosorbide de formule (I): 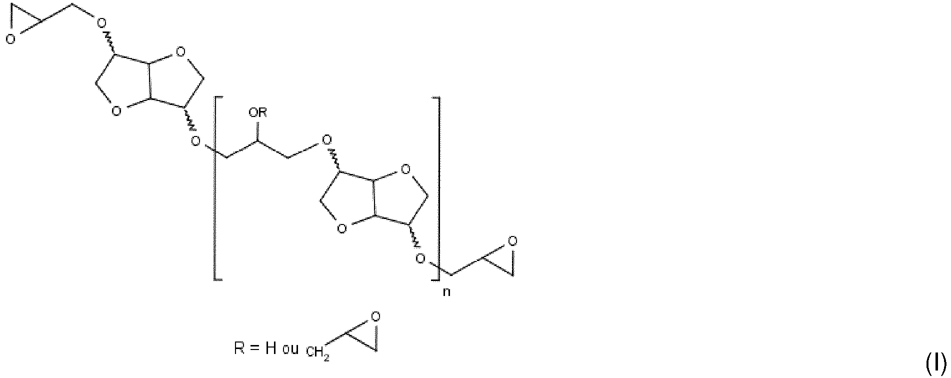 où n est un entier de 0 à 300, dans une composition durcissable selon l'une quelconque des revendications 13 à 15 pour stabiliser un matériau fibreux ou poreux par imprégnation sous vide.

## Patentansprüche

1. Epoxid-Prepolymerzusammensetzung, umfassend:
- (A) ein Isosorbid-Epoxid der Formel (I), 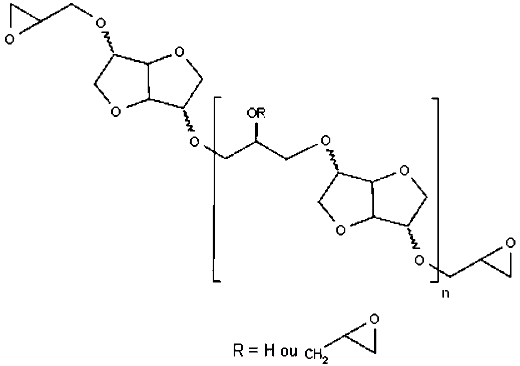 wobei n eine ganze Zahl von 0 bis 300 ist,
- (B) ein Epoxid mit mindestens 3 Epoxidfunktionen.

2. Zusammensetzung nach Anspruch 1, **dadurch gekennzeichnet, dass** das Epoxidäquivalent der Epoxidfunktionen in dem Isosorbid-Epoxid (A) zwischen 120 und 1500 g/Äq., bevorzugt zwischen 150 und 300 g/Äq., stärker bevorzugt zwischen 160 und 250 g/Äq. liegt.

3. Zusammensetzung nach einem der Ansprüche 1 oder 2, **dadurch gekennzeichnet, dass** der Anteil des Epoxids (A) in der Epoxidharzzusammensetzung zwischen 15 Gew.-% und 75 Gew.-%, insbesondere zwischen 15 Gew.-% und 60 Gew.-%, stärker bevorzugt zwischen 15 Gew.-% und 55 Gew.-%, stärker bevorzugt zwischen 15 Gew.-% und 50 Gew.-%, noch stärker bevorzugt zwischen 20 Gew.-% und 50 Gew.-%, bezogen auf das Gesamtgewicht der Zusammensetzung, liegt.

4. Zusammensetzung nach einem der Ansprüche 1 bis 3, **dadurch gekennzeichnet, dass** das Epoxid (A) eine bei 25°C gemessene Brookfield-Viskosität von 500 mPa·s bis 10000 mPa·s, insbesondere von 1000 mPa·s bis 8000 mPa·s, stärker bevorzugt von 2000 mPa·s bis 6000 mPa·s, stärker bevorzugt von 3000 mPa·s bis 5000 mPa·s aufweist, gemessen wie in der Beschreibung angegeben.

5. Zusammensetzung nach einem der Ansprüche 1 bis 4, **dadurch gekennzeichnet, dass** das Epoxid (B) aus Polyglycidylethern ausgewählt ist, insbesondere Triglycidylethern oder Tetraglycidylethern.

6. Zusammensetzung nach einem der Ansprüche 1 bis 5, **dadurch gekennzeichnet, dass** das Epoxidäquivalent der Epoxidfunktionen in dem Epoxid (B) zwischen 120 und 500 g/Äq., bevorzugt zwischen 130 und 350 g/Äq., stärker bevorzugt zwischen 140 und 250 g/Äq. liegt.

7. Zusammensetzung nach einem der Ansprüche 1 bis 6, **dadurch gekennzeichnet, dass** der Anteil des Epoxids (B) in der Epoxidharzzusammensetzung zwischen 20 Gew.-% und 85 Gew.-%, stärker bevorzugt zwischen 25 Gew.-% und 80 Gew.-%, stärker bevorzugt zwischen 30 Gew.-% und 75 Gew.-%, stärker bevorzugt zwischen 35 Gew.-% und 70 Gew.-%, stärker bevorzugt zwischen 40 Gew.-% und 60 Gew.-%, bezogen auf das Gesamtgewicht der Zusammensetzung, liegt.

8. Zusammensetzung nach einem der Ansprüche 1 bis 7, **dadurch gekennzeichnet, dass** das Gewichtsverhältnis des Epoxids (A) zu dem Epoxid (B) zwischen 0,3 und 1,0, insbesondere zwischen 0,3 und 0,8, stärker bevorzugt zwischen 0,4 und 0,7, noch stärker bevorzugt zwischen 0,5 und 0,6 liegt.

9. Zusammensetzung nach einem der Ansprüche 1 bis 8, **dadurch gekennzeichnet, dass** sie ferner ein Reaktivverdünnungsmittel (C) umfasst, das aus Monoepoxiden ausgewählt ist.

10. Zusammensetzung nach einem der Ansprüche 1 bis 9, **dadurch gekennzeichnet, dass** das Reaktivverdünnungsmittel (C) aus Monoglycidylethern ausgewählt ist, insbesondere Alkylglycidylethern, Arylglycidylethern oder Glycidylethern von Carbonsäuren.

11. Zusammensetzung nach einem der Ansprüche 1 bis 10, **dadurch gekennzeichnet, dass** der Anteil des Reaktivverdünnungsmittels (C) in der Epoxidharzzusammensetzung zwischen 0 Gew.-% und 10 Gew.-%, insbesondere zwischen 2 Gew.-% und 8 Gew.-%, stärker bevorzugt zwischen 3 Gew.-% und 7 Gew.-%, bezogen auf das Gesamtgewicht der Zusammensetzung, liegt.

12. Zusammensetzung nach einem der Ansprüche 1 bis 11, **dadurch gekennzeichnet, dass** sie ferner einen oder mehrere Zusatzstoffe umfasst, ausgewählt aus Farbmitteln, insbesondere Pigmenten oder löslichen Farbstoffen, oder aus Katalysatoren, wie Lewis-Säure-Katalysatoren, tertiären Aminen oder Imidazol.

13. Härtbare Zusammensetzung, umfassend die Epoxid-Prepolymerzusammensetzung nach einem der Ansprüche 1 bis 12 und einen Härter (D), ausgewählt aus Polyaminen.

14. Härtbare Zusammensetzung nach Anspruch 13, **dadurch gekennzeichnet, dass** der Härter (D) ausgewählt ist aus:
- linearen aliphatischen Diaminen, wie 1,2-Diaminomethan, 1,3-Diaminopropan, Butan-1,4-diamin, Pentan-1,5-diamin, 1,6-Diaminohexan oder 1,12-Diaminododecan,
- cyclischen aliphatischen Diaminen, wie Isophorondiamin (IPDA), 4,4'-Diaminodicyclohexylmethan (PACM), 1,2-Diaminocyclohexan (DACH), Menthandiamin oder 1,3-Bis(aminomethyl)cyclohexan (1,3 BAC),
- aromatischen Diaminen, wie 4,4'-Methylenbis(2,6-diethylanilin) (MDEA), 4,4'-Diaminodiphenylsulfon (DDS), 9,9-Bis(4-aminophenyl)fluoren (BAFL), Diethyltoluoldiamin (DETDA), Dimethylthiotoluoldiamin (DMTDA), 4,4'-Methylenbis(2-ethylanilin) (MOEA), m-Xylylendiamin, m-Phenylendiamin oder 4,4'-Diaminodiphenylmethan,
- Triaminen, wie Diethylentriamin (DTA),
- Tetraminen, wie Triethylentetramin,
- Pentaminen, wie Tetraethylenpentamin,
- Dimeren Fettsäurediaminen wie Priamine^{®} 1074 von Croda,
- Polyetheraminen wie Poly(oxypropylen)diamin (Jeffamine^{®} D-230 von Huntsman Petrochemical, LLC), Poly(oxypropylen)triamin (Jeffamine^{®} T-403 von Huntsman Petrochemical, LLC), oder
- jedem anderen Polyamin, wie Polyethylenimin (z. B. Lupasol^{®} FG von BASF), Dipropendiamin, Diethylaminopropylamin, N-Aminoethylpiperazin oder Dicyandiamid (Dicy),
- oder einer Mischung davon.

15. Härtbare Zusammensetzung nach einem der Ansprüche 13 bis 14,
**dadurch gekennzeichnet, dass** das Verhältnis der Anzahl der -NH-Gruppen des Härters (D) zu der Anzahl der Epoxidgruppen der Epoxid-Prepolymerzusammensetzung zwischen 1:2 und 2:1, insbesondere zwischen 2:3 und 3:2 liegt und stärker bevorzugt 1:1 beträgt.

16. Verwendung eines Isosorbid-Epoxids der Formel (I), 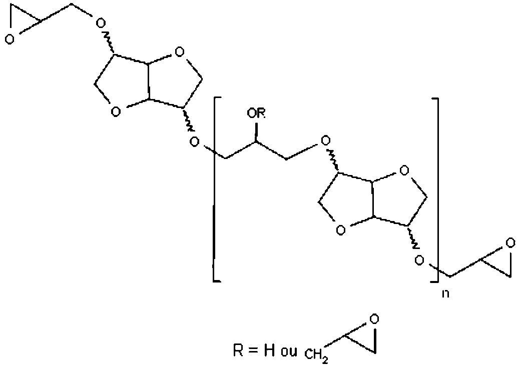
wobei n eine ganze Zahl von 0 bis 300 ist,
in einer härtbaren Zusammensetzung nach einem der Ansprüche 13 bis 15 zur Stabilisierung eines faserigen oder porösen Materials durch Vakuumimprägnierung.

## Claims

1. An epoxy prepolymer composition comprising:
- (A) an isosorbide epoxide of formula (I): 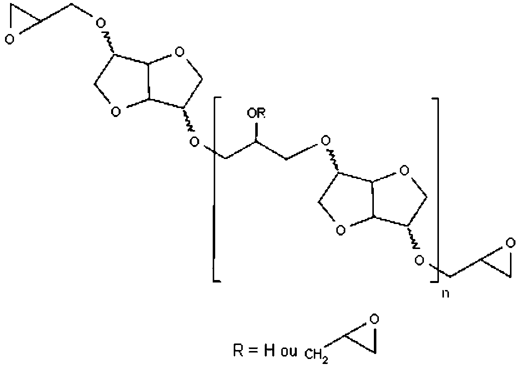 where n is an integer from 0 to 300,
- (B) an epoxide comprising at least 3 epoxy functions.

2. The composition according to claim 1, wherein the equivalent weight of the epoxy functions in the isosorbide epoxide (A) is between 120 and 1500 g/eq., preferably between 150 and 300 g/eq., more preferably between 160 and 250 g/eq.

3. The composition according to any one of claims 1 and 2, wherein the proportion of epoxide (A) in the epoxy resin composition is between 15% and 75% by weight, in particular between 15% and 60% by weight, more particularly between 15% and 55% by weight, more particularly between 15% and 50% by weight, more particularly between 20% and 50% by weight relative to the total weight of the composition.

4. The composition according to any one of claims 1 to 3, wherein epoxide (A) has a Brookfield viscosity measured at 25°C of between 500 mPa.s and 10000 mPa.s, in particular between 1000 mPa.s and 8000 mPa.s, more particularly between 2000 mPa.s and 6000 mPa.s, more particularly between 3000 mPa.s and 5000 mPa.s, measured as indicated in the description.

5. The composition according to any one of claims 1 to 4, wherein epoxide (B) is selected from polyglycidyl ethers, in particular triglycidyl ethers or tetraglycidyl ethers.

6. The composition according to any one of claims 1 to 5, wherein the equivalent weight of the epoxy functions in epoxide (B) is between 120 and 500 g/eq., preferably between 130 and 350 g/eq., more preferably between 140 and 250 g/eq.

7. The composition according to any one of claims 1 to 6, wherein the proportion of epoxide (B) in the epoxy resin composition is between 20% and 85% by weight, more particularly between 25% and 80% by weight, more particularly between 30% and 75% by weight, more particularly between 35% and 70% by weight, more particularly between 40% and 60% by weight relative to the total weight of the composition.

8. The composition according to any one of claims 1 to 7, wherein the weight ratio of epoxide (A) to epoxide (B) is between 0.3 and 1.0, in particular between 0.3 and 0.8, more particularly between 0.4 and 0.7, more particularly still between 0.5 and 0.6.

9. The composition according to any one of claims 1 to 8, wherein it further comprises a reactive diluent (C) selected from mono-epoxides.

10. The composition according to any one of claims 1 to 9, wherein the reactive diluent (C) is selected from monoglycidyl ethers, in particular alkyl glycidyl ethers, aryl glycidyl ethers or carboxylic acid glycidyl ethers.

11. The composition according to any one of claims 1 to 10, wherein the proportion of reactive diluent (C) in the epoxy resin composition is between 0% and 10% by weight, in particular between 2% and 8% by weight, more particularly between 3% and 7% by weight, relative to the total weight of the composition.

12. The composition according to any one of claims 1 to 11, wherein it further comprises one or more additives selected from colorants, in particular pigments or soluble dyes, or from catalysts, such as Lewis acid catalysts, tertiary amines or imidazole.

13. A curable composition comprising the epoxy prepolymer composition according to any one of claims 1 to 12 and a curing agent (D) selected from polyamines.

14. The curable composition according to claim 13, wherein the curing agent (D) is selected from:
- linear aliphatic diamines, such as 1,2-diaminomethane, 1,3-diaminopropane, butane-1,4-diamine, pentane-1,5-diamine, 1,6-diaminohexane, or 1,12-diaminododecane,
- cyclic aliphatic diamines, such as isophorone diamine (IPDA), 4,4'-diaminodicyclohexylmethane (PACM), 1,2-diaminocyclohexane (DACH), menthanediamine or 1,3-bis(aminomethyl)cyclohexane (1,3 BAC),
- aromatic diamines, such as 4,4'-methylenebis(2,6-diethylaniline) (MDEA), 4,4'-diaminodiphenyl sulfone (DDS), 9,9-bis(4-aminophenyl)fluorene (BAFL), diethyltoluene diamine (DETDA), dimethyl thiotoluene diamine (DMTDA), 4,4'-methylenebis(2-ethylaniline) (MOEA), m-xylylenediamine, m-phenylenediamine or 4,4'-diaminodiphenylmethane,
- triamines, such as diethylene triamine (DTA),
- tetramines, such as triethylenetetramine,
- pentamines, such as tetraethylenepentamine,
- dimer fatty acid diamines such as Priamine^{®} 1074 from Croda,
- polyetheramines such as poly(oxypropylene) diamine (Jeffamine^{®} D-230 from Huntsman Petrochemical, LLC), poly(oxypropylene) triamine (Jeffamine^{®} T-403 from Huntsman Petrochemical, LLC), or
- any other polyamine, such as polyethylene imine (e.g. Lupasol^{®} FG from BASF), dipropenediamine, diethylaminopropylamine, N-aminoethylpiperazine or dicyandiamide (Dicy),
- or a mixture thereof.

15. The curable composition according to any one of claims 13 to 14, wherein the ratio of the number of -NH groups of the curing agent (D) to the number of epoxy groups of the epoxy prepolymer composition is between 1:2 and 2:1, in particular between 2:3 and 3:2, and more particularly is equal to 1:1.

16. Use of an isosorbide epoxide of formula (I): 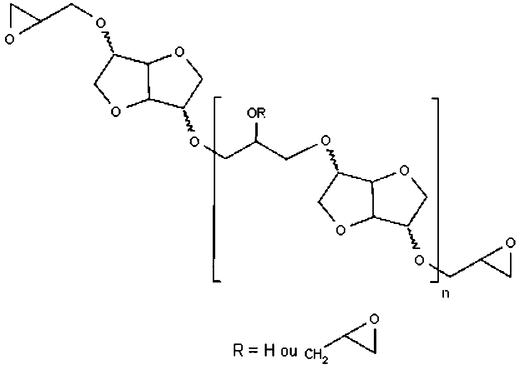
where n is an integer from 0 to 300,
in a curable composition according to any one of claims 13 to 15 for stabilizing a fibrous or porous material by vacuum impregnation.
